# EUROPEAN PATENT APPLICATION

(11) **EP 2 863 645 A1**
(43) Date of publication of application: **22.04.2015**
(21) Application number: 14189634.0
(22) Date of filing: 21.10.2014
(51) Int. Cl.: H04N 21/81, H04N 21/488, H04N 21/442, H04N 21/24, H04N 21/434, H04N 17/00, H04H 20/12, H04N 7/088

(54) **Checking closed caption consistency in transport stream in real/deferred time**

(30) Priority: 21.10.2013 IN MU32982013
(71) Applicant: Tektronix, Inc., Beaverton, Oregon 97077-0001 (US)
(72) Inventor: Anantwar, Mayur, 560001 Bangalore (IN)
(74) Representative: Clarke, Jeffrey David

(57) **Abstract**

A machine includes an input port to receive closed caption information, which can be decoded from a transport stream. A calculator calculates a bit rate for the closed caption information. The calculated bit rate for the closed caption information can then be output. An alert can also be generated if the calculated bit rate for the closed caption information is zero for longer than a user-defined period of time.

## Description

### FIELD OF THE INVENTION

This disclosure pertains to video streams, and more particularly to verifying the consistency of closed caption data in video streams.

### BACKGROUND

The use of closed captions has made it possible for deaf and hard-of-hearing persons to more fully appreciate video transmissions. Without closed captions, a deaf or hard-of-hearing person has to resort to lip reading to determine what the participants are saying. But not everyone is skilled in lip reading. And lip reading is only viable when the speaker's face is clearly visible. If the speaker is facing the wrong way, or the camera does not capture the speaker's lip motions, even someone skilled at lip reading will be unable to determine what is being said. But with closed captions, the text, potentially along with other information, is displayed right on the screen, where it can be easily read by anyone.

There are two primary ways to encode closed captions in video streams. In the American Television Systems Committee (ATSC) standard, closed captions are added to the video data, before being multiplexed with the audio data. In the Digital Video Broadcasting (DVB) standard, closed captions are encoded in their own data, which is then multiplexed with both the video data and the audio data. These standards are well known in the art.

There are a number of errors that can occur in the closed caption data. The closed caption encoder might fail to encode any closed caption data. Or the closed caption encoder might encode some languages, but not all languages that are supposed to be captioned. Or the closed caption encoder might encode captions using one format (e.g., EIA-608) but not another format (e.g., EIA-708). Or the closed caption encoder might stop encoding closed captions after some interval of time. Or the closed caption encoder might fail to encode the data in the correct place within the transport stream (alternatively, the multiplexer might fail to include the closed caption data in the transport stream). Detecting these problems is difficult, and it is not feasible to manually monitor the transport stream for the closed captions, particularly when multiple formats or multiple languages of closed captions are to be included.

A need remains for a way to address these and other problems associated with the prior art.

### SUMMARY OF THE INVENTION

Aspects of the invention include a machine. The machine includes an input port which can receive closed caption information. The closed caption information can be part of a transport stream, or it can be decoded from a transport stream before being input to the machine. A calculator can then calculate a bit rate for the closed caption information, and the calculated bit rate for the closed caption information can be output from the machine.

### BRIEF DESCRIPTION OF THE DRAWINGS

FIG. 1 shows a machine for monitoring the bit rate for closed caption information, according to an embodiment of the invention.
FIG. 2 shows a transport stream with multiple closed caption information.
FIG. 3 shows a flowchart of a procedure for monitoring the bit rate for closed caption information using the machine of FIG. 1.
FIG. 4 shows consistency checking of closed caption information encoded using the American Television Systems Committee (ATSC) standard.
FIG. 5 shows consistency checking of closed caption information encoded using the Digital Video Broadcasting (DVB) standard.
FIG. 6 shows a plot of closed caption bit rate data.
FIG. 7 shows a plot of closed caption bit rate data with an error.

### DETAILED DESCRIPTION

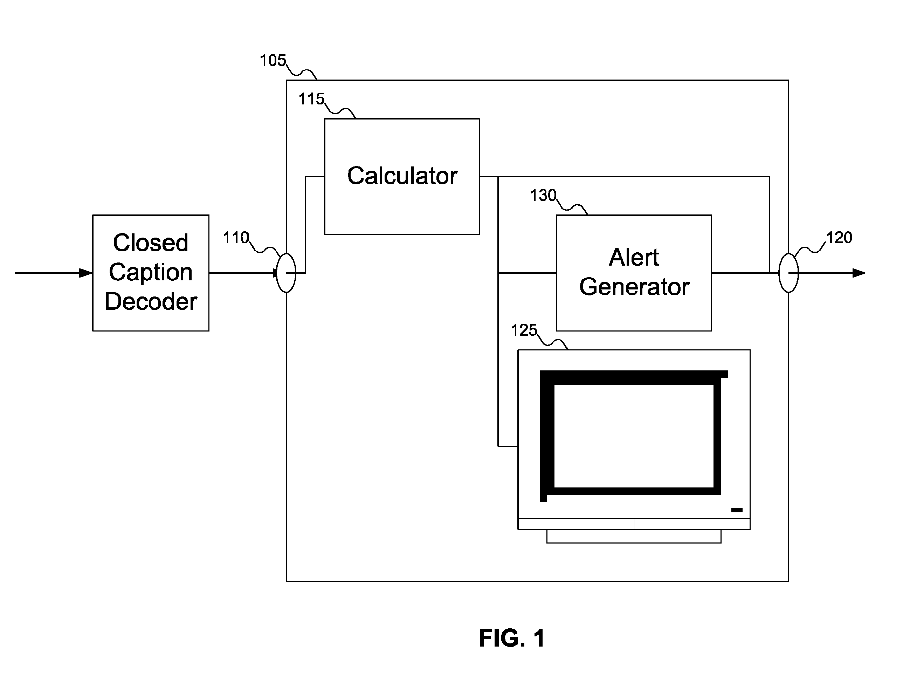

FIG. 1 shows a machine for monitoring the bit rate for closed caption information, according to an embodiment of the invention. In FIG. 1, machine 105 is shown. Machine 105 can be any machine designed to check the consistency of closed caption information. In addition, machine 105 can perform other functionality as well. For example, machine 105 can be part of a transport stream analyzer.

Machine 105 can receive closed caption information via input port 110. Using calculator 115, machine 105 can calculate a bit rate for the closed caption information. This bit rate information can be output via output port 120. Alternatively or in addition, the bit rate information can be routed to an output device, such as display 125. Other possible output devices can include printers.

Machine 105 can also include alert generator 130. Alert generator can generate an alert when the bit rate calculated by calculator 115 becomes zero for too long, indicating that there has been no closed caption information for a period of time. How long the period of time needs to be before alert generator 130 generates an alert can be user-defined: that is, a user can input the period of time which is considered to show a problem with the closed caption information.

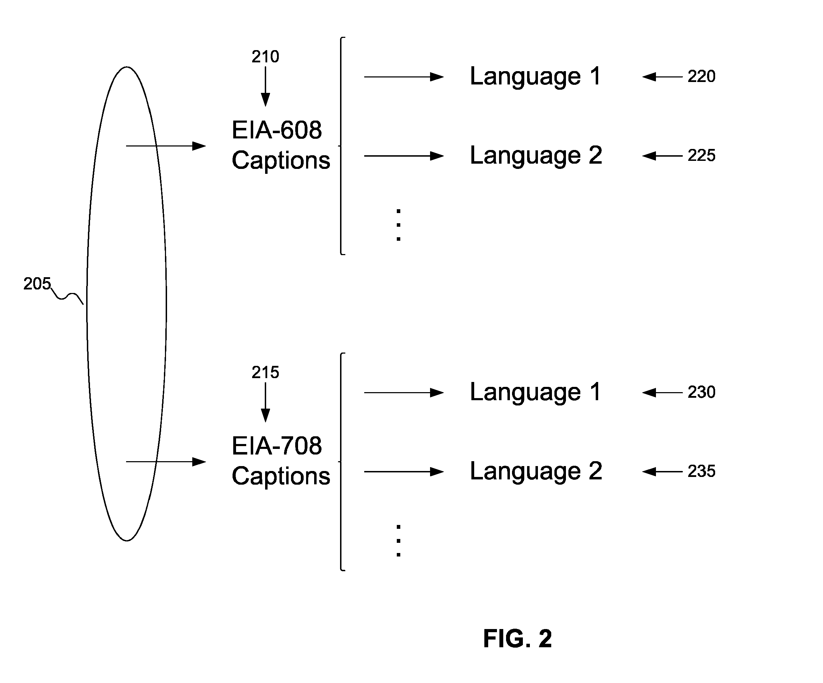

FIG. 2 shows a transport stream with multiple closed caption information. In FIG. 2, transport stream 205 is shown. Transport stream 205 includes two closed caption streams 210 and 215. Closed caption stream 210 includes closed captions encoded using the EIA-608 standard. Closed caption stream 215 includes closed captions encoded using the EIA-708 standard. Each closed caption stream can include more than one closed caption data: for example, closed caption stream 210 includes closed captions in two languages 220 and 225, and closed caption stream 215 includes closed captions in two languages 230 and 235. While FIG. 2 shows closed caption streams 210 and 215 each includes closed captions in two languages, a person of ordinary skill in the art will recognize that each closed caption stream can include closed captions in any number of languages: there is no requirement that each closed caption stream include the same number of languages. In addition, a person of ordinary skill in the art will recognize that there can be any number of closed caption streams, encoding closed captions using any number of different standards. Other closed caption standards include SCTE20 and SCTE21.

The various different standards that can be used to encode closed captions implement closed captioning differently. For example, the closed captions can be encoded into the video of the transport stream as user data (as occurs with MPEG-2 and H.264 video), or the closed captions can be encoded in the private data of a packetized elementary stream (as occurs with the Digital Video Broadcasting standard). Embodiments of the invention are not concerned with how the closed captions are encoded, so long as the decoded closed caption data is received.

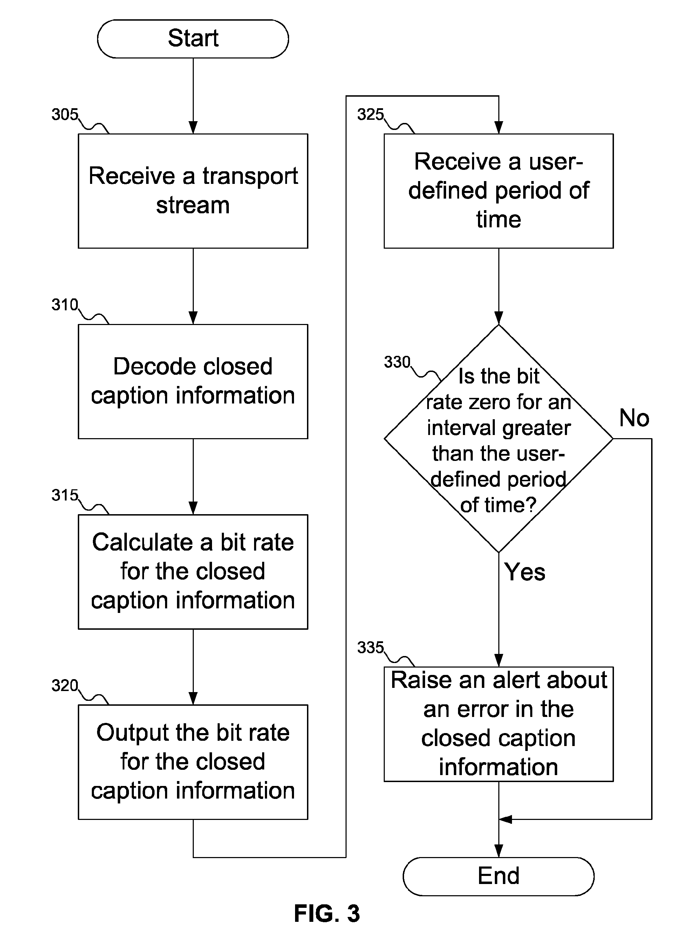

FIG. 3 shows a flowchart of a procedure for monitoring the bit rate for closed caption information using the machine of FIG. 1. In FIG. 3, at block 305, the system receives a transport stream, and at block 310, the system decodes the closed caption information. As discussed above, the manner in which the closed caption information is encoded is beyond the scope of the invention: as far as embodiments of the invention are concerned, the closed caption information might not be encoded at all. At block 315, the system calculates a bit rate for the closed caption information. At block 320, the system outputs the bit rate for the closed caption information.

At block 325, the system receives a user-defined period of time. At block 330, the system determines if the bit rate for the closed caption information is zero for an interval greater than the user-defined period of time. If so, then at block 335, the system raises an alert about an error in the closed caption information.

The flowchart described above represents a possible embodiment of the invention. Embodiments of the invention are not limited to those shown in the flowcharts. Various blocks can be omitted, and the order of blocks can be rearranged, without loss of generality to embodiments of the invention.

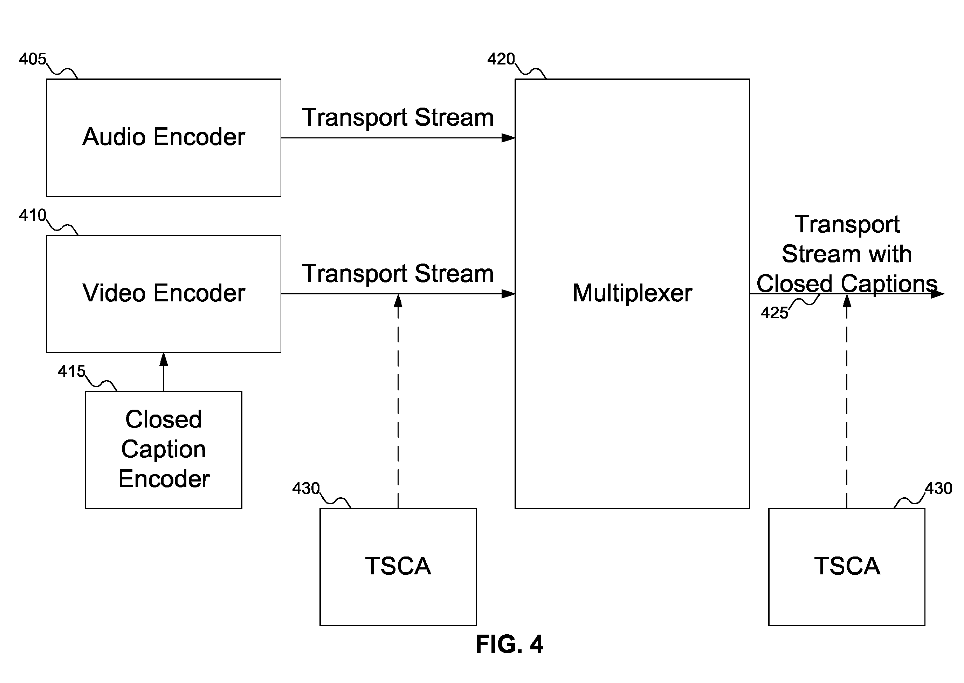

FIG. 4 shows consistency checking of closed caption information encoded using the American Television Systems Committee (ATSC) standard. In FIG. 4, audio encoder 405 encodes audio data. Video encoder 410 encodes video data. Video encoder 410 also receives closed caption information from closed caption encoder (415), which is included the video transport stream. The audio and video transport streams are multiplexed by multiplexer 420, producing transport stream 425 with closed captions.

To check the consistency of the closed caption information, consistency checks can be performed at various places. As shown in FIG. 4, Transport Stream Compliance Analyzer software (TSCA) 430 by Tektronix, Inc. can analyze the transport stream with the closed caption information either before or after it is multiplexed with the audio data. If desired, TSCA 430 can analyze the transport stream both before and after multiplexing. TSCA 430 is used as an example of a tool to check the consistency of closed caption information, and any equivalent tool can be substituted for TSCA 430.

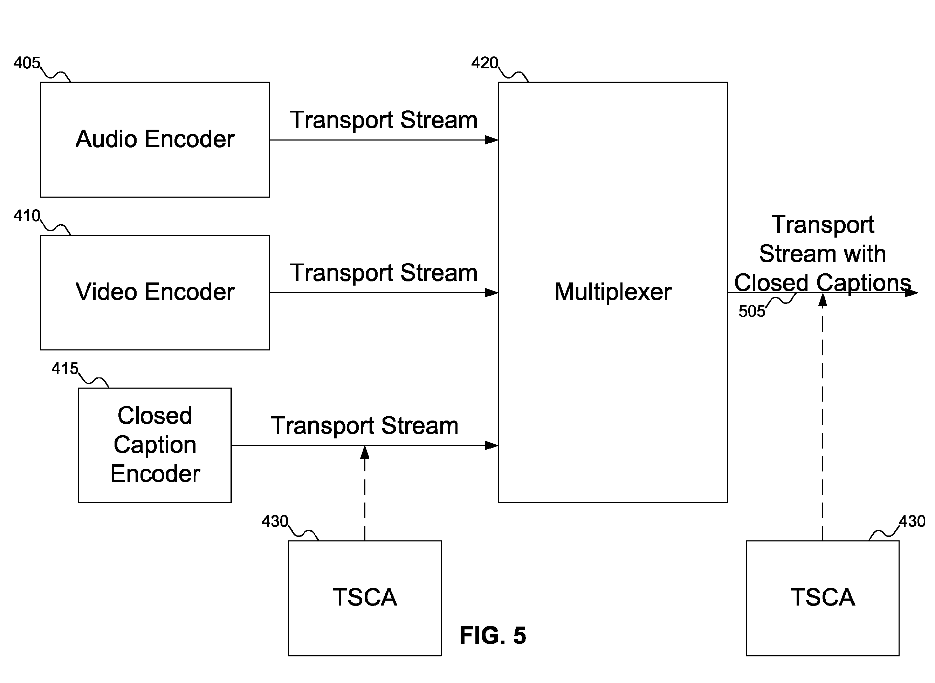

FIG. 5 shows consistency checking of closed caption information encoded using the Digital Video Broadcasting (DVB) standard. In FIG. 5, audio encoder 405 and video encoder 410 operate to encode the audio and video data into transport streams. But instead of the closed caption information being included within the video transport stream, closed caption encoder 415 generates a separate transport stream that is also input to multiplexer 420. Multiplexer 420 multiplexes the various transport streams to produce transport stream 505 with the closed captions.

As in FIG. 4, to check the consistency of the closed caption information, consistency checks can be performed at various places. As shown in FIG. 5, Transport Stream Compliance Analyzer software (TSCA) 430 by Tektronix, Inc. can analyze the transport stream with the closed caption information either before or after it is multiplexed with the audio data. If desired, TSCA 430 can analyze the transport stream both before and after multiplexing.

By incorporating embodiments of the invention into TSCA 430, the quality of the consistency check performed by TSCA 430 can be enhanced. Specifically, any tool that does not check the bit rate for the closed caption information could miss the lack of closed caption information as an error. By adding the functionality of the claimed invention, the efficiency of the tool can be increased.

While the above discussion describes embodiments of the invention being incorporated into TSCA, embodiments of the invention can also be incorporated into other products. For example, other products by Tektronix, Inc. that can include embodiments of the invention are MTS4EA Elementary Stream Analysis Software and Cerify File-Based Video & Audio Content Analysis.

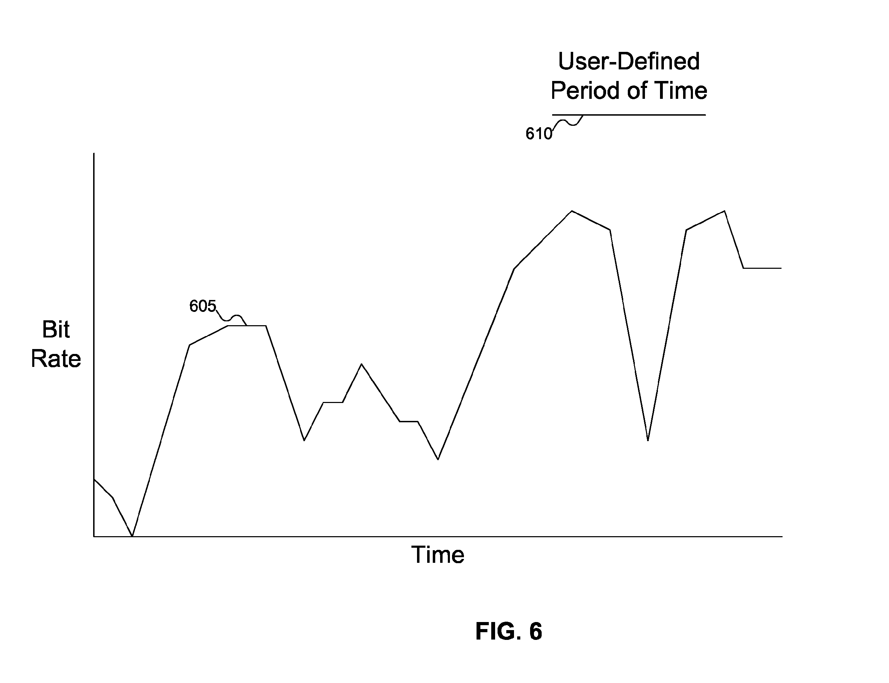

FIG. 6 shows a plot of closed caption bit rate data. In FIG. 6, graph 605 shows the measured bit rate for the closed caption information. As can be seen, as time passes the bit rate can vary. The bit rate can even drop to zero occasionally, if there is a temporary lack of closed caption information. But as long as there is closed caption information in the transport stream, the bit rate is not zero for an extended period of time. In particular, the bit rate for the closed caption information does not drop to zero for as long as user-defined period of time 610.

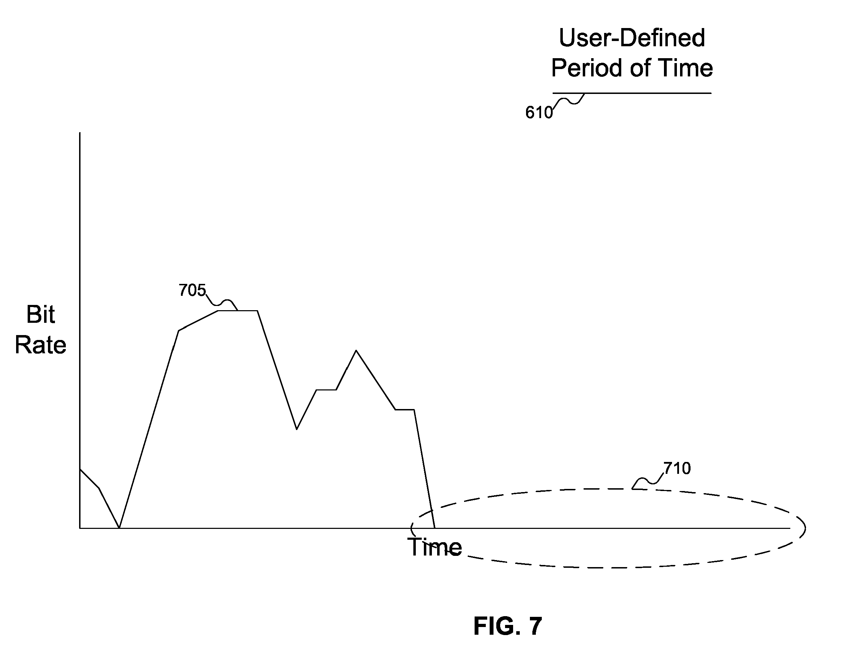

FIG. 7 shows a plot of closed caption bit rate data with an error. In FIG. 7, a bit rate graph 705 is shown, which is similar to that shown in FIG. 6. But eventually the bit rate for the closed caption information drops to zero, and stays there, as shown by circle 710. Because the bit rate for the closed caption information stays zero for a period of time longer than user-defined period of time 610, an alert can be raised about the error.

Embodiments of the invention can operate in either real time or deferred time. That is, some embodiments of the invention can operate in real time, informing an appropriate party when the bit rate for the closed caption information becomes zero for too long. Such embodiments of the invention can be useful, for example, for content going out live - news programs, sporting events, and so on - or to double-check pre-recorded content. Other embodiments of the invention can operate in deferred time, analyzing content that has been pre-recorded.

The following discussion is intended to provide a brief, general description of a suitable machine in which certain aspects of the invention can be implemented. Typically, the machine includes a system bus to which is attached processors, memory, e.g., random access memory (RAM), read-only memory (ROM), or other state preserving medium, storage devices, a video interface, and input/output interface ports. The machine can be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, or a system of communicatively coupled machines or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine can include embedded controllers, such as programmable or non-programmable logic devices or arrays, Application Specific Integrated Circuits, embedded computers, smart cards, and the like. The machine can utilize one or more connections to one or more remote machines, such as through a network interface, modem, or other communicative coupling. Machines can be interconnected by way of a physical and/or logical network, such as an intranet, the Internet, local area networks, wide area networks, etc. One skilled in the art will appreciated that network communication can utilize various wired and/or wireless short range or long range carriers and protocols, including radio frequency (RF), satellite, microwave, Institute of Electrical and Electronics Engineers (IEEE) 810.11, Bluetooth, optical, infrared, cable, laser, etc. The machine can be a test and measurement device, an oscilloscope, a file-based video content analyzer, a real-time video stream monitor, or any other desired device.

The invention can be described by reference to or in conjunction with associated data including functions, procedures, data structures, application programs, etc. which when accessed by a machine results in the machine performing tasks or defining abstract data types or low-level hardware contexts. Associated data can be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data can be delivered over transmission environments, including the physical and/or logical network, in the form of packets, serial data, parallel data, propagated signals, etc., and can be used in a compressed or encrypted format. Associated data can be used in a distributed environment, and stored locally and/or remotely for machine access.

Having described and illustrated the principles of the invention with reference to illustrated embodiments, it will be recognized that the illustrated embodiments can be modified in arrangement and detail without departing from such principles. And, though the foregoing discussion has focused on particular embodiments, other configurations are contemplated. In particular, even though expressions such as "in one embodiment" or the like are used herein, these phrases are meant to generally reference embodiment possibilities, and are not intended to limit the invention to particular embodiment configurations. As used herein, these terms can reference the same or different embodiments that are combinable into other embodiments.

Embodiments of the invention can extend to the following statements, without limitation:

An embodiment of the invention includes a system, comprising: a machine, an input port on the machine to receive closed caption information from a transport stream, a calculator to determine a bit rate for the closed caption information, and an output port on the machine to output the calculated bit rate for the closed caption information.

An embodiment of the invention includes a system, comprising: a machine, an input port on the machine to receive closed caption information from a transport stream, a calculator to determine a bit rate for the closed caption information, and an output port on the machine to output the calculated bit rate for the closed caption information, the output port including a display to present the calculated bit rate for the closed caption information to a user.

An embodiment of the invention includes a system, comprising: a machine, an input port on the machine to receive closed caption information from a transport stream and to receive a user-defined period of time, a calculator to determine a bit rate for the closed caption information, an output port on the machine to output the calculated bit rate for the closed caption information, and an alert generator to raise an alert to a user regarding an error in the closed caption if the calculated bit rate for the closed caption information is zero for longer than the user-defined period of time.

An embodiment of the invention includes a system, comprising: a machine, an input port on the machine to receive a plurality of closed caption information from a transport stream, wherein a first closed caption of the plurality of closed caption information is different from a second closed caption of the plurality of closed caption information, a calculator to determine a bit rate for the closed caption information, and an output port on the machine to output the calculated bit rate for the closed caption information.

An embodiment of the invention includes a system, comprising: a machine, an input port on the machine to receive closed caption information from a transport stream, the transport stream including the closed caption information in a user data field of video, a calculator to determine a bit rate for the closed caption information, and an output port on the machine to output the calculated bit rate for the closed caption information.

An embodiment of the invention includes a system, comprising: a machine, an input port on the machine to receive closed caption information from a transport stream, the transport stream including the closed caption information in a packetized elementary stream of a digital video broadcast, a calculator to determine a bit rate for the closed caption information, and an output port on the machine to output the calculated bit rate for the closed caption information.

An embodiment of the invention includes a method, comprising: receiving a transport stream at a machine, decoding a closed caption information from the transport stream in the machine, calculating a bit rate for the decoded closed caption information, and outputting the bit rate for the decoded closed caption information from the machine.

An embodiment of the invention includes a method, comprising: receiving a transport stream at a machine, decoding a closed caption information from the transport stream in the machine, calculating a bit rate for the decoded closed caption information, and outputting the bit rate for the decoded closed caption information from the machine including plotting the bit rate for the closed caption information on a display.

An embodiment of the invention includes a method, comprising: receiving a transport stream at a machine, decoding a plurality of closed caption information from the transport stream in the machine, wherein a first closed caption information of the plurality of closed caption information is different from a second closed caption information of the plurality of closed caption information, calculating a bit rate for each of the plurality of decoded closed caption information, and outputting the bit rate for the decoded closed caption information from the machine, including plotting the bit rate for each of the plurality of decoded closed caption information.

An embodiment of the invention includes a method, comprising: receiving a transport stream at a machine, decoding a plurality of closed caption information from the transport stream in the machine, wherein a first closed caption information of the plurality of closed caption information is different from a second closed caption information of the plurality of closed caption information and wherein the plurality of closed caption information are drawn from a set consisting of EIA-608 data, EIA-708 data, SCTE20 data, and SCTE21 data, calculating a bit rate for each of the plurality of decoded closed caption information, and outputting the bit rate for the decoded closed caption information from the machine, including plotting the bit rate for each of the plurality of decoded closed caption information.

An embodiment of the invention includes a method, comprising: receiving a transport stream at a machine, decoding a plurality of closed caption information from the transport stream in the machine, wherein a first closed caption information of the plurality of closed caption information is different from a second closed caption information of the plurality of closed caption information and wherein the plurality of closed caption information are drawn from a set consisting of at least two different languages, calculating a bit rate for each of the plurality of decoded closed caption information, and outputting the bit rate for the decoded closed caption information from the machine, including plotting the bit rate for each of the plurality of decoded closed caption information.

An embodiment of the invention includes a method, comprising: receiving a transport stream at a machine, decoding a closed caption information from the transport stream in the machine, calculating a bit rate for the decoded closed caption information, receiving a user-defined period of time, outputting the bit rate for the decoded closed caption information from the machine, and if the bit rate for the decoded closed caption information is zero for longer than the user-defined period of time, raising an alert to a user regarding an error in the closed caption information.

An embodiment of the invention includes a method, comprising: receiving a transport stream at a machine, decoding a closed caption information from a user data field of video in the transport stream in the machine, calculating a bit rate for the decoded closed caption information, and outputting the bit rate for the decoded closed caption information from the machine.

An embodiment of the invention includes a method, comprising: receiving a transport stream at a machine, decoding a closed caption information from a packetized elementary stream of a digital video broadcast transport stream in the machine, calculating a bit rate for the decoded closed caption information, and outputting the bit rate for the decoded closed caption information from the machine.

Consequently, in view of the wide variety of permutations to the embodiments described herein, this detailed description and accompanying material is intended to be illustrative only, and should not be taken as limiting the scope of the invention. What is claimed as the invention, therefore, is all such modifications as can come within the scope of the following claims and equivalents thereto.

## Claims

1. A system, comprising:
a machine (105);
an input port (110) on the machine (105) to receive closed caption information (210, 215) from a transport stream (205);
a calculator (115) to determine a bit rate for the closed caption information (210, 215); and
an output port (120) on the machine (105) to output the calculated bit rate for the closed caption information (210, 215).

2. The system as claimed in claim 1, wherein the output port (120) comprises a display (125) to present the calculated bit rate for the closed caption information (210, 215) to a user.

3. The system as claimed in claim 1 or 2, wherein:
the input port (110) is operative to receive a user-defined period of time; and
the system comprises an alert generator (130) to raise an alert to a user regarding an error in the closed caption if the calculated bit rate for the closed caption information (210, 215) is zero for longer than the user-defined period of time.

4. The system as claimed in claim 1 or 2, wherein the input port (110) is operative to receive a plurality of closed caption information (210, 215), wherein a first closed caption (210) of the plurality of closed caption information (210, 215) is different from a second closed caption (215) of the plurality of closed caption information (210, 215).

5. The system as claimed in any preceding claim, wherein the transport stream (205) comprises the closed caption information (210, 215) in a user data field of video.

6. The system as claimed in any of claims 1 to 4, wherein the transport stream (205) comprises the closed caption information (210, 215) in a packetized elementary stream of a digital video broadcast.

7. A method, comprising:
receiving (305) a transport stream (205) at a machine;
decoding (310) a closed caption information (210, 215) from the transport stream (205) in the machine (105);
calculating (315) a bit rate for the decoded closed caption information (210, 215); and
outputting (320) the bit rate for the decoded closed caption information (210, 215) from the machine (105).

8. The method as claimed in claim 7, wherein outputting (320) the bit rate for the decoded closed caption information (210, 215) comprises plotting (320) the bit rate for the closed caption information (210, 215) on a display.

9. The method as claimed in claim 7 or 8, wherein:
decoding (310) a closed caption information (210, 215) from the transport stream (205) in a machine (105) comprises decoding a plurality of closed caption information (210, 215) from the transport stream (205) in the machine (105), wherein a first closed caption information (210, 215) (210) of the plurality of closed caption information (210, 215) is different from a second closed caption information (210, 215) (215) of the plurality of closed caption information (210, 215);
calculating (315) a bit rate for the decoded closed caption information (210, 215) comprises calculating a bit rate for each of the plurality of decoded closed caption information (210, 215); and
plotting (320) the bit rate for the decoded closed caption information (210, 215) comprises plotting the bit rate for each of the plurality of decoded closed caption information (210,215).

10. The method as claimed in claim 9, wherein the plurality of closed caption information (210, 215) are drawn from a set consisting of EIA-608 data, EIA-708 data, SCTE20 data, and SCTE21 data.

11. The method as claimed in claim 9, wherein the plurality of closed caption information (210, 215) are drawn from a set consisting of at least two different languages.

12. The method as claimed in any of claims 7 to 11, comprising:
receiving (325) a user-defined period of time; and
if the bit rate for the decoded closed caption information (210, 215) is zero for longer than the user-defined period of time, raising (330, 335) an alert to a user regarding an error in the closed caption information (210, 215).

13. The method as claimed in claim 7 or 8, wherein decoding (310) a closed caption information (210, 215) from the transport stream (205) in a machine (105) comprises decoding (310) the closed caption information (210, 215) from a user data field of video in the transport stream (205) in the machine (105).

14. The method as claimed in claim 7 or 8, wherein decoding (310) a closed caption information (210, 215) from the transport stream (205) in a machine (105) comprises decoding (310) the closed caption information (210, 215) from a packetized elementary stream of a digital video broadcast transport stream (205) in the machine (105).
